Europäisches Patentamt

(19) European Patent Office

Office européen des brevets

(11) Publication number: **0 179 568**
**A1**

(12) **EUROPEAN PATENT APPLICATION**

(21) Application number: 85306733.8

(22) Date of filing: 23.09.85

(51) Int. Cl.⁴: **G 06 F 7/52**

(30) Priority: **11.10.84 US 659985**

(43) Date of publication of application:
**30.04.86 Bulletin 86/18**

(84) Designated Contracting States:
**DE FR GB NL SE**

(71) Applicant: AMERICAN MICROSYSTEMS,
INCORPORATED
3800 Homestead Road
Santa Clara, CA 95051(US)

(72) Inventor: Whitaker, Sterling R.
5143 Redfish
Chubbuck Bannock Idaho(US)

(72) Inventor: Edmondson, Charles A.
99 Westello
Pocatello Bannock Idaho(US)

(72) Inventor: Harwood, Richard L.
536N. 15th
Pocatello Bannock Idaho(US)

(74) Representative: Thomson, Roger Bruce et al,
POLLAK MERCER & TENCH High Holborn House 52-54
High Holborn
London WC1V 6RY(GB)

(54) Multiplier circuitry using pass transistors and method of constructing same.

(57) PASS transistors are used to reduce the layout complexity of multiplication circuitry by using PASS transistors connected to pass a first and second input function to an output node in response to a selected output function on the output node. The PASS transistor comprises a transistor capable of passing an input function in response to a CONTROL signal applied to the transistor, thereby to generate an output function related to the input function.

Figure 7

## MULTIPLIER CIRCUITRY USING PASS TRANSISTORS
## AND METHOD OF CONSTRUCTING SAME

### Field of the Invention

This invention relates to multiplying circuits and in particular to multiplier circuits formed using PASS transistors so as substantially to reduce the number of active devices required. The invention also relates to methods of constructing such multiplier circuits.

Our European patent application No. 83302602.4 (0094234) discloses a number of PASS transistor logic circuits and methods for designing them. Such logic circuits and methods, as appropriate, may be used in the circuitry and methods described hereinafter.

### Description of the Prior Art

Boolean logic expressions may be realised through classical logic design methods with networks of combinational logic. Logic networks using MOS technology are often formed with NAND, NOR and inversion gates, since these structures are easily implemented. The PASS transistor is another common MOS structure.

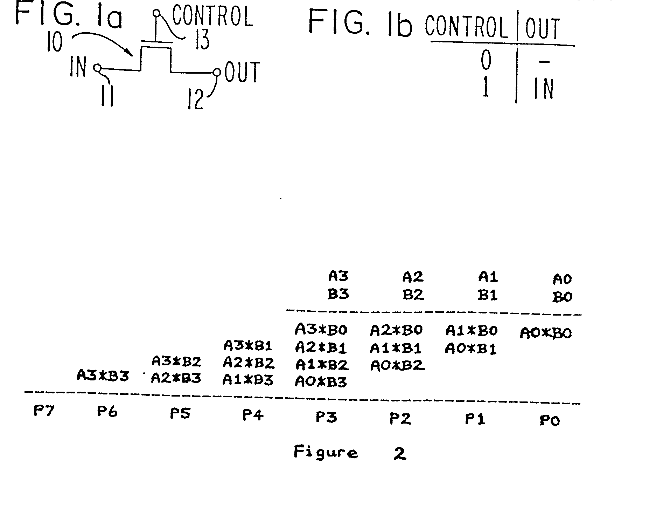

By way of background relating to PASS transistors, Figure 1a shows a PASS transistor with its logical function. When the gate or control electrode 13 to PASS transistor 10 is asserted ( and by "asserted" is meant driven to a voltage so as to form a conductive path between input lead 11 and output lead 12), transistor 10 passes the logic state at input lead 11 to output lead 12. The input and output leads of an MOS transistor may be arbitrarily chosen because an MOS transistor is bidirectional. For convenience, the input lead will be defined as the terminal driven by the source of a logic state. The output lead 12 of PASS transistor 10 typically applies the passed logic state to the input lead of another series-connected logic structure. Output leads of a number of PASS transistors may be joined to drive the same input of a logic structure, provided that all PASS transistors whose controls are asserted are passing the same logic state. The use of PASS transistors as bidirectional transmission gates is described in an article entitled "VSLI: A New Frontier for Systems Designers" published in the January 1982 Computer Journal of the IEEE by Douglas G. Faibain.

The use of the PASS transistor as a circuit element yields several advantages over prior art circuits such as MOS-integrated circuits. First, the PASS transistor dissipates no significant steady state of power. Second, arrays of PASS transistors form structures of regular topology, often consuming less area for a given logical function than consumed by other types of circuits.

The major disadvantages of the PASS transistor is that the voltage level of the high signal on its output lead is degraded due to the characteristics of the field effect transistor used as the PASS transistor, but this can be overcome by careful circuit design. After passing a high level through one PASS transistor, no significant further degradation of voltage level occurs when the signal is passed through N additional PASS transistors, assuming no PASS transistor control input is driven by the output of another PASS transistor.

Summary of the Invention

In accordance with the invention there is provided a method of constructing a multiplier circuit for multiplying two n bit numbers, said circuit using as its basic element the PASS transistor, said PASS transistor having an input lead, an output lead and a control lead controlled by a control function, the method being characterised by the steps of:

establishing a truth table of the desired multiplication values for the sum and carry functions of said multiplication, said truth table depicting the state of the output variables for each state of the input variables to said multiplier circuit;

entering into said truth table for each input state the input variables which, when passed to the output lead of a PASS transistor, yield the desired output variable or variables, said input variables comprising the PASS function for that state;

entering the PASS function for each state of said input variables into a modified Karnaugh map wherein each state of the modified Karnaugh map contains the particular input variables which yield the desired output variable, said particular input variables being called the PASS function for that state of input variables;

identifying the identical PASS variables in each PASS function for each state of input variables such that every state has at least one PASS variable identified;

identifying a control function among the input variables which is independent of the identical PASS variables previously identified, for controlling said control lead of said PASS transistor; and

constructing a multiplier circuit using said PASS transistors in accordance with said identified PASS variables and said control function.

Also in accordance with the invention there is provided a multiplication circuit for multiplying two n bit words, said circuit including as its basic element PASS transistors, wherein each PASS transistor comprises an input lead, an output lead and a control lead for controlling the passing of signals from said input lead to said output lead, said multiplication circuit being characterised by comprising:

a plurality of $n^2$ PASS transistor cells,

each said cell having a carry out network and a sum out network,

means for supplying the n bits of the first of said words as inputs to n of said cells, and

means for supplying the n bits of the second of said words as inputs to n of said cells,

said $n^2$ cells being interconnected to each other to produce from each said cell a carry out signal from said carry out network and a sum out signal from said sum out network corresponding to the sum out and carry out for the multiplication of the bits of said two words supplied to said cell.

Iterative arrays of PASS transistor cells are used to construct a 16 x 16 multiplier. The core consists of 256 cells each containing 22 PASS transistors, 5 inverters and 1 2-input NAND gate. The cell in 3 micron CMOS occupies only a small area making a 16 x 16 core extremely dense.

PASS transistor cells can also be arrayed to convert the input from 2's complement to signed magnitude or pass the signed magnitude input word. The core output can either be converted to 2's complement or passed as unsigned magnitude through a set of PASS transistor cells.

Brief Description of the Drawings

Figures 1a and 1b illustrate a PASS transistor and the truth table for that transistor;

Figure 2 shows the multiplication of two four bit words;

Figure 3 shows the arrangement of 16 identical cells for performing the multiplication shown in Fig.2;

Figures 4a,4b and 4c show truth tables associated with the multiplication performed in the circuitry of Figure 3;

Figures 5a and 5b represent the Karnaugh maps and transistor network respectively, for implementing the carry function of the multiplier;

Figures 6a and 6b represent the Karnaugh maps and transistor network respectively, for implementing the sum function of the multiplier; and,

Figure 7 shows the complete cell configuration for the multiplier.

Description of the Preferred Embodiment

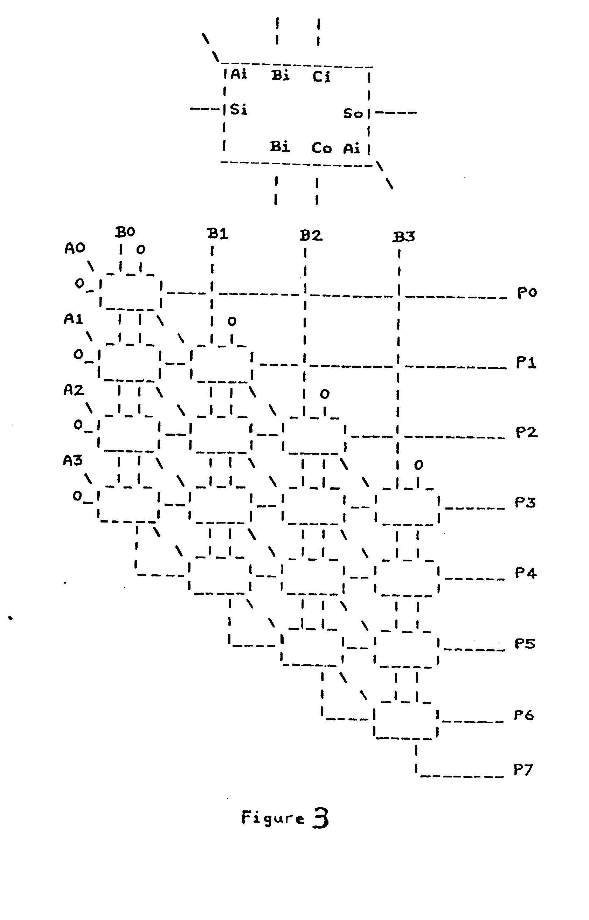

Parallel multiplication consists of the addition of partial products. Figure 2 shows the multiplication of two four bit words, A3 A2 A1 A0 and B3 B2 B1 B0. Line one if the product of A and B0, line two is the product of A and B1, line three is the product of A and B2, while line four is the product of A and B3. These partial products are then added together to form the total product P. P0 is the product of A0 B0; P1 is the sum of the products A1 B0 and A0 B1; P2 is the sum of A2 B0, A1 B1, A0 B2 and the carry produced in the formation of P1. P3 is formed as the sum of A3 B0, A2 B1, A1 B2, A0 B3 and three possible carries from the formation of P2. P4 is the sum of A3 B1, A2 B2, A1 B3 and four possible carries from the formation of P3. P5 is the sum of A3 B2, A2 B3 and three possible carries from the construction of P4. P6 is the sum of A3 B3 and two possible carries from P5. P7 is the possible carry from P6. This process may be expanded to obtain a 2n bit output word from the multiplication of two n bit words.

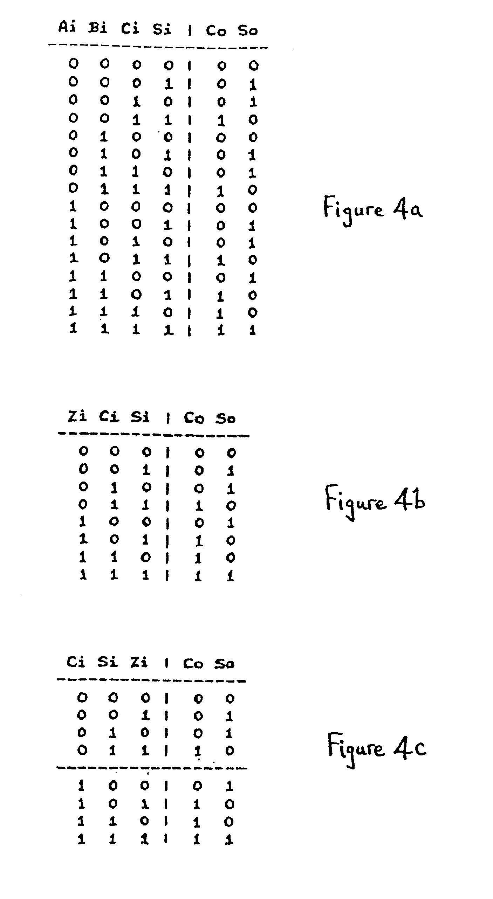

Figure 3 shows the arrangement of an array of 16 identical cells which could produce the product resulting from the multiplication of two four bit words. Each cell produces a sum and carry out based on the addition of $A_i$, $B_i$, $C_{i-1}$, $j$ and $S_{i-1}$. At the edges $S_i$, $j-1$ is equal to $C_{i-1}$, $j-1$. The truth table in Figure 4a summarises the carry out and sum out information of a typical cell. Noting that the truth table is symmetrical about the function $A_i$ and $B_i$, the four input truth table can be reduced into a 3 input table around the function $Z_i = A_i B_i$. Figure 4b shows the new truth table, which is then rearranged as shown in Figure 4c and decomposed about the variable $C_i$. This arrangement reduces the capacitances in the carry and sum propagation paths.

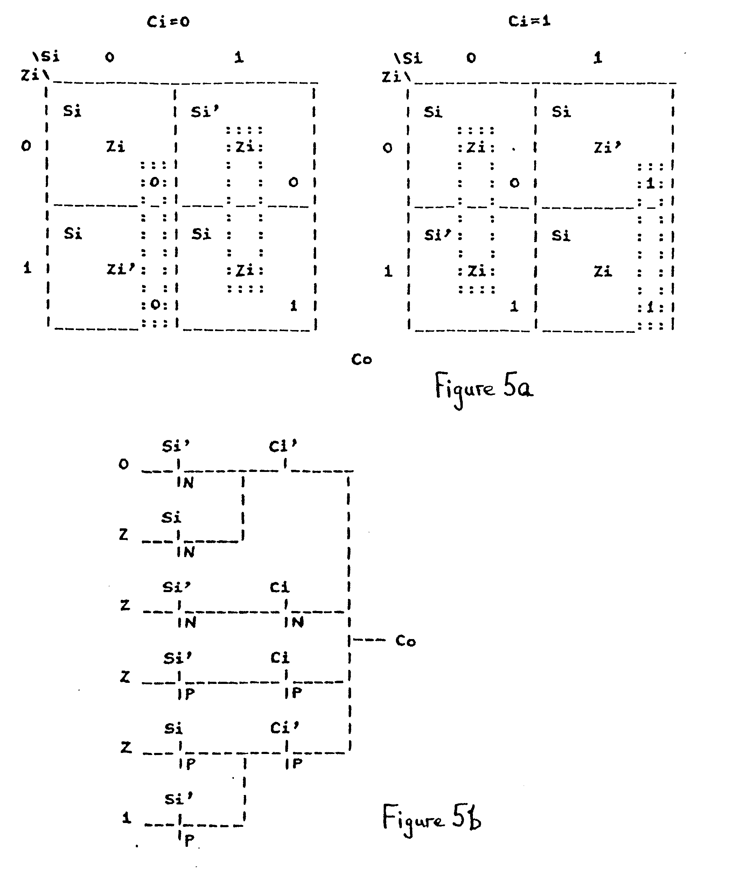

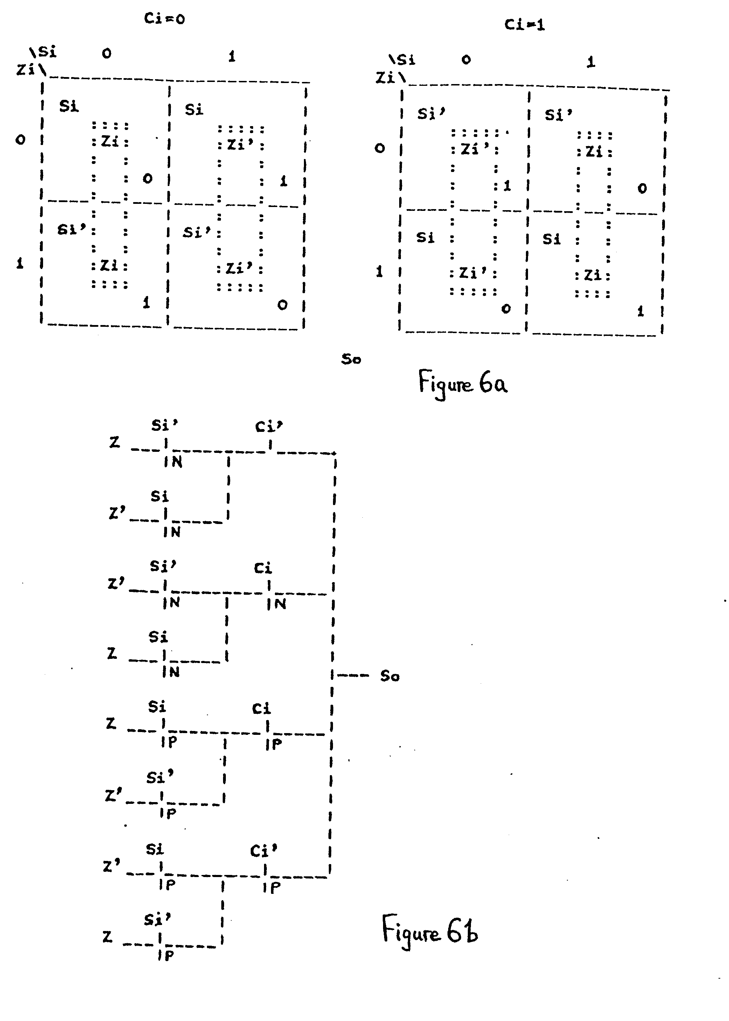

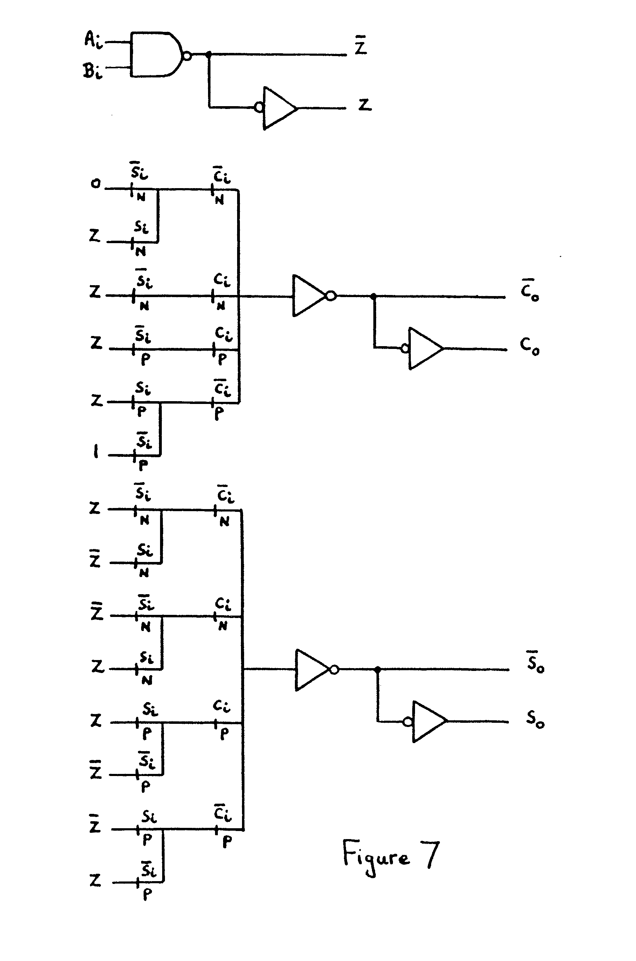

The carry logic is reduced by the two variable Karnaugh maps of Figure 5a to create the PASS transistor network of Figure 5b. This is described in more detail in the aforesaid European patent application No. 83302602.4 (0094234). The sum logic is reduced by the Karnaugh map of Figure 6a to the PASS network of Figure 6b. Each cell of Figure 3 contains these two PASS networks. Four inverting buffers are used to reduce the load seen by the PASS networks and provide the inverse of the carry and sum signals and a 2-input NAND produced (AB)' with an inverter producing AB. The complete cell configuration is shown in Figure 7.

A multiplier could also be constructed as configured in Figure 3, but would have to propagate the carry/sum through $2n-1$ cells. By using the technique of carry look ahead, the propagation time can be reduced to the delay through $n+1$ cells.

CLAIMS

1. A method of constructing a multiplier circuit for multiplying two n bit numbers, said circuit using as its basic element the PASS transistor, said PASS transistor having an input lead, an output lead and a control lead controlled by a control function, the method being characterised by the steps of:

establishing a truth table of the desired multiplication values for the sum and carry functions of said multiplication, said truth table depicting the state of the output variables for each state of the input variables to said multiplier circuit;

entering into said truth table for each input state the input variables which, when passed to the output lead of a PASS transistor, yield the desired output variable or variables, said input variables comprising the PASS function for that state;

entering the PASS function for each state of said input variables into a modified Karnaugh map wherein each state of the modified Karnaugh map contains the particular input variables which yield the desired output variable, said particular input variables being called the PASS function for that state of input variables;

identifying the identical PASS variables in each PASS function for each state of input variables such that every state has at least one PASS variable identified;

identifying a control function among the input variables which is independent of the identical PASS variables previously identified, for controlling said control lead of said PASS transistor; and

constructing a multiplier circuit using said PASS transistors in accordance with said identified PASS variables and said control function.

2. A method in accordance with claim 1, further characterised by the steps of:

entering the carry function of said multiplication into a first modified Karnaugh map; and

entering the sum function of said multiplication into a second Karnaugh map.

3. A method in accordance with claim 2, characterised in that said first and said second modified Karnaugh maps each have two portions.

4. A method in accordance with claim 3, characterised in that the first Karnaugh map portion corresponds to a carry in of zero and the second Karnaugh map corresponds to a carry in of one.

5. A multiplication circuit for multiplying two n bit words, said circuit including as its basic element PASS transistors, wherein each PASS transistor comprises an input lead, an output lead and a control lead for controlling the passing of signals from said input lead to said output lead, said multiplication circuit being characterised by comprising:

a plurality of $n^2$ PASS transistor cells,

each said cell having a carry out network and a sum out network,

means for supplying the n bits of the first of said words as inputs to n of said cells, and

means for supplying the n bits of the second of said words as inputs to n of said cells,

said $n^2$ cells being interconnected to each other to produce from each said cell a carry out signal from said carry out network and a sum out signal from said sum out network corresponding to the sum out and carry out for the multiplication of the bits of said two words supplied to said cell.

6. A circuit in accordance with claim 5, further characterised in that said n bits of said first word are Ai, the bits of said second word are Bi, and said plurality of PASS transistor cells functions in accordance with the following truth table:

| Zi | Ci | Si | : | Co | So |
|----|----|----|---|----|----|
| 0  | 0  | 0  | : | 0  | 0  |
| 0  | 0  | 1  | : | 0  | 1  |
| 0  | 1  | 0  | : | 0  | 1  |
| 0  | 1  | 1  | : | 1  | 0  |
| 1  | 0  | 0  | : | 0  | 1  |
| 1  | 0  | 1  | : | 1  | 0  |
| 1  | 1  | 0  | : | 1  | 0  |
| 1  | 1  | 1  | : | 1  | 1  |

where $Zi = AiBi$, Ci is the carry in value, Si is the sum in value, Co is the carry out value and So is the sum out value.

7. A circuit in accordance with claim 5, further characterised in that said n bits of said first word are Ai, the bits of said second word are Bi, and said plurality of PASS transistor cells functions in accordance with the following truth table:

| Ci | Si | Zi | : | Co | So |
|----|----|----|---|----|----|
| 0  | 0  | 0  | : | 0  | 0  |
| 0  | 0  | 1  | : | 0  | 1  |
| 0  | 1  | 0  | : | 0  | 1  |
| 0  | 1  | 1  | : | 1  | 0  |
| 1  | 0  | 0  | : | 0  | 1  |
| 1  | 0  | 1  | : | 1  | 0  |
| 1  | 1  | 0  | : | 1  | 0  |
| 1  | 1  | 1  | : | 1  | 1  |

where $Zi = AiBi$, Ci is the carry in value, Si is the sum in value, Co is the carry out value and So is the sum out value.

0179568

FIG. la

10 CONTROL
13

IN
11 OUT
12

FIG. lb

| CONTROL | OUT |
|---------|-----|
| 0 | – |
| 1 | IN |

|    |       |       |       | A3    | A2    | A1    | A0    |
|----|-------|-------|-------|-------|-------|-------|-------|
|    |       |       |       | B3    | B2    | B1    | B0    |
|    |       |       | A3*B1 | A3*B0 | A2*B0 | A1*B0 | A0*B0 |
|    |       | A3*B2 | A2*B2 | A2*B1 | A1*B1 | A0*B1 |       |
|    | A3*B3 | A2*B3 | A1*B3 | A1*B2 | A0*B2 |       |       |
|    |       |       |       | A0*B3 |       |       |       |
| P7 | P6    | P5    | P4    | P3    | P2    | P1    | P0    |

Figure 2

Figure 3

| Ai | Bi | Ci | Si | | Co | So |
|----|----|----|----|---|----|-----|
| 0 | 0 | 0 | 0 | | 0 | 0 |
| 0 | 0 | 0 | 1 | | 0 | 1 |
| 0 | 0 | 1 | 0 | | 0 | 1 |
| 0 | 0 | 1 | 1 | | 1 | 0 |
| 0 | 1 | 0 | 0 | | 0 | 0 |
| 0 | 1 | 0 | 1 | | 0 | 1 |
| 0 | 1 | 1 | 0 | | 0 | 1 |
| 0 | 1 | 1 | 1 | | 1 | 0 |
| 1 | 0 | 0 | 0 | | 0 | 0 |
| 1 | 0 | 0 | 1 | | 0 | 1 |
| 1 | 0 | 1 | 0 | | 0 | 1 |
| 1 | 0 | 1 | 1 | | 1 | 0 |
| 1 | 1 | 0 | 0 | | 0 | 1 |
| 1 | 1 | 0 | 1 | | 1 | 0 |
| 1 | 1 | 1 | 0 | | 1 | 0 |
| 1 | 1 | 1 | 1 | | 1 | 1 |

Figure 4a

| Zi | Ci | Si | | Co | So |
|----|----|----|---|----|-----|
| 0 | 0 | 0 | | 0 | 0 |
| 0 | 0 | 1 | | 0 | 1 |
| 0 | 1 | 0 | | 0 | 1 |
| 0 | 1 | 1 | | 1 | 0 |
| 1 | 0 | 0 | | 0 | 1 |
| 1 | 0 | 1 | | 1 | 0 |
| 1 | 1 | 0 | | 1 | 0 |
| 1 | 1 | 1 | | 1 | 1 |

Figure 4b

| Ci | Si | Zi | | Co | So |
|----|----|----|---|----|-----|
| 0 | 0 | 0 | | 0 | 0 |
| 0 | 0 | 1 | | 0 | 1 |
| 0 | 1 | 0 | | 0 | 1 |
| 0 | 1 | 1 | | 1 | 0 |
| 1 | 0 | 0 | | 0 | 1 |
| 1 | 0 | 1 | | 1 | 0 |
| 1 | 1 | 0 | | 1 | 0 |
| 1 | 1 | 1 | | 1 | 1 |

Figure 4c

Ci=0

```
\Si     0              1
Zi\ _____
   |                  |              |
   | Si               | Si'          |
   |                  |    ::::       |
 0 |    Zi            |    :Zi:       |
   |            :::|  |    :  :        |
   |            :0:|  |    :  :    0   |
   |_____:_:|__|____:__:_____|
   |            : :|  | Si  :  :        |
   | Si         : :|  |     :  :        |
   |            : :|  |     :  :        |
 1 |    Zi':  :|  |    :Zi:       |
   |            : :|  |    ::::       |
   |            :0:|  |            1   |
   |_____:::|__|_____|
```

Ci=1

```
\Si     0              1
Zi\ _____
   |                  |              |
   | Si               | Si           |
   |    ::::            |              |
 0 |    :Zi:   .        |    Zi'       |
   |    :  :            |         :::|
   |    :  :   0        |         :1:|
   |___:__:_____|_____:_:|
   |    :              | Si      : :|
   | Si':  :            |         : :|
   |    :  :            |         : :|
 1 |    :Zi:            |    Zi    : :|
   |    ::::            |         : :|
   |            1       |         :1:|
   |_____|_____:::|
```

Co

Figure 5a

```
        Si'        Ci'
 0 ___|_____|_____
       |N     |        |
       Si     |        |
 Z ___|_____|        |
       |N              |
       Si'        Ci    |
 Z ___|_____|_____|
       |N        |N    |
       Si'        Ci    |
 Z ___|_____|_____|--- Co
       |P        |P    |
       Si        Ci'   |
 Z ___|_____|_____|
       |P        |P
       Si'        |
 1 ___|_____|
       |P
```

Figure 5b

Ci=0

| \Si | 0 | 1 |
|---|---|---|

Zi\

Si  
:Zi:  
0  

Si  
:Zi':  
1  

Si'  
:Zi:  
1  

Si'  
:Zi':  
0  

Ci=1

| \Si | 0 | 1 |
|---|---|---|

Zi\

Si'  
:Zi':  
1  

Si'  
:Zi:  
0  

Si  
:Zi':  
0  

Si  
:Zi:  
1  

So

Figure 6a

Z ___ Si' | Ci' |N

Z' ___ Si | IN

Z' ___ Si' | Ci |N IN

Z ___ Si | IN

Z ___ Si | Ci |P IP

Z' ___ Si' | IP

Z' ___ Si | Ci' |P IP

Z ___ Si' | IP

So

Figure 6b

0179568

Figure 7

European Patent
Office

**EUROPEAN SEARCH REPORT**

0179568

Application number

EP 85 30 6733

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 094 234 (AMERICAN MICROSYSTEMS INC.,)(publ. 16-11-1983) * Page 11, line 19 - page 12, line 14; page 18, lines 33-38; page 19, line 18 - page 20, line 4; figures 15,16,23,24 * | 1-7 | G 06 F 7/52 |
| A | EP-A-0 110 767 (E.F.C.I.S.)(publ. 13-06-1984) * Figure 3 * | 1-7 | |

TECHNICAL FIELDS SEARCHED (Int. Cl.4)

G 06 F

The present search report has been drawn up for all claims

| Place of search | Date of completion of the search | Examiner |
|---|---|---|
| THE HAGUE | 16-01-1986 | BEINDORFF W.H. |